# EUROPÄISCHE PATENTSCHRIFT

(11) **EP 3 046 864 B1**
(45) Veröffentlichungstag und Bekanntmachung des Hinweises auf die Patenterteilung: **27.02.2019**
(21) Anmeldenummer: 14766174.8
(22) Anmeldetag: 16.09.2014
(51) Int. Cl.: B67C 3/00, B65C 3/26

(54) **VERFAHREN UND VORRICHTUNG ZUM BEFÜLLEN VON FORMINSTABILEN KUNSTSTOFFBEHÄLTERN MIT EINEM FLÜSSIGEN FÜLLGUT**
METHOD AND DEVICE FOR FILLING DIMENSIONALLY UNSTABLE PLASTIC CONTAINERS WITH A LIQUID CONTENT
PROCÉDÉ ET DISPOSITIF POUR LE REMPLISSAGE DE RÉCIPIENTS EN MATÉRIAU SYNTHÉTIQUE DE FORME INSTABLE PAR UN MATÉRIAU DE REMPLISSAGE LIQUIDE

(30) Priorität: 18.09.2013 DE 102013218729
(43) Veröffentlichungstag der Anmeldung: 27.07.2016
(73) Patentinhaber: Krones AG, 93073 Neutraubling (DE)
(72) Erfinder: ZÖLFL, Markus, 93073 Neutraubling (DE); HAHN, Wolfgang, 93073 Neutraubling (DE); RAITH, Stefan, 93073 Neutraubling (DE)
(74) Vertreter: Grünecker Patent- und Rechtsanwälte PartG mbB
(86) Internationale Anmeldenummer: PCT/EP2014/069658
(87) Internationale Veröffentlichungsnummer: WO 2015/040006

(56) Entgegenhaltungen:
- EP-A1- 0 460 511
- EP-A1- 0 522 254
- EP-A1- 0 622 615
- WO-A1-2009/156027
- DE-A1-102006 047 566
- DE-A1-102011 103 836

## Beschreibung

Die Erfindung bezieht sich auf ein Verfahren zum Befüllen von forminstabilen Kunststoffbehältern mit einem flüssigen Füllgut und eine Vorrichtung zur Durchführung eines solchen Verfahrens.

Bei Kunststoffbehältern gleicher Art mit schwankenden Fassungsvermögen kommt es beim Befüllen mit einem festen Volumen an Füllgut zu schwankenden Füllhöhen. Dann sind verschieden große Bereiche des Kopfraums des Kunststoffbehälters ungefüllt. Wird in diesem Bereich ein Gas, beispielsweise Stickstoff, eingespritzt, hängt die benötigte Menge des Gases von dem Kopfraumvolumen des Kunststoffbehälters ab. Außerdem können schwankende Kopfraumvolumina zu schwankenden Innendrücken der Kunststoffbehälter nach dem Füllen führen. Verschieden harte Kunststoffbehälter und/oder stark unterschiedliche Füllhöhen werden üblicherweise vom Verbraucher als Qualitätsmangel registriert.

Die DE 42 33 843 A1 offenbart ein Verfahren zum Füllen von Behältern aus Kunststoff, bei denen aufgrund der Wärmebehandlung beim Reinigen eine Schrumpfung möglich ist. Die DE 42 39 954 A1 offenbart ein Verfahren zum Abfüllen eines flüssigen Füllgutes in dem nach dem Füllen mittels eines Sensors überprüft wird, ob eine vorgegebene Füllhöhe bereits erreicht ist. Die DE 44 46 548 A1 und die DE 10 2006 062 536 A1 offenbaren ebenfalls Verfahren zum Füllen von Behältern.

Viele Kunststoffbehälter, die verwendet werden, sind jedoch beispielsweise aufgrund immer stärkerer Gewichtseinsparung forminstabil. Für solche Kunststoffbehälter sind die zuvor beschriebenen Verfahren nicht anwendbar oder weisen andere Nachteile auf, können z.B. kompliziert und zeitaufwendig anzuwenden sein.

Je leichter streckgeblasene Kunststoffbehälter sind, desto mehr können sich Änderungen der Streckblasparameter und Änderungen der Umgebungsbedingungen auf das Behältervolumen auswirken. Aufgrund dieser Problematik kann die mögliche Gewichtsreduzierung dadurch begrenzt sein, dass eine gewisse Konstanz des Behältervolumens sichergestellt werden muss.

Die EP 0 522 254 A1 offenbart ein Verfahren und eine Vorrichtung gemäß den Oberbegriffen der Ansprüche 1 und 14.

Der Erfindung liegt die Aufgabe zugrunde, eines oder mehrere dieser Probleme und Nachteile zu beseitigen oder zu reduzieren.

Die Erfindung umfasst ein Verfahren zum Befüllen von forminstabilen Kunststoffbehältern mit einem flüssigen Füllgut nach Anspruch 1 sowie eine Vorrichtung zum Durchführen eines solchen Verfahrens nach Anspruch 14.

Im Verfahren zum Befüllen von forminstabilen Kunststoffbehältern (im Folgenden auch: Behälter) mit einem flüssigen Füllgut ist der Behälter beim Bestimmen des Volumens vorgespannt. Beim Vorspannen wird der ungefüllte Behälter mit Gas oder einem Gasgemisch von innen unter Druck gesetzt (unter Innendruck gesetzt). Dieses Gas zählt nicht als Füllgut, so dass ein vorgespannter Behälter trotz Innendruck als ungefüllt bezeichnet und betrachtet wird. Das Volumen des Behälters wird bestimmt, bevor der Behälter befüllt wird, also wenn der Behälter noch ungefüllt ist. Dies kann z.B. die Notwendigkeit weiterer Kontrollmessungen während oder nach dem Befüllen des Behälters vermeiden.

Das Gas oder Gasgemisch, mit dem der Behälter vorgespannt wird, kann Druckluft oder ein inertes Gas, beispielsweise Stickstoff oder Argon, sein oder umfassen.

Forminstabile Behälter, die gemäß dem Verfahren befüllt werden, können beispielsweise forminstabile Getränkebehälter aus Kunststoff sein. Forminstabile Behälter können streckgeblasene Behälter aus PET, PEN oder einem anderen Kunststoff sein. Insbesondere bei solchen streckgeblasenen Behältern ist oft das Gewicht bereits so reduziert, so dass die Behälter im ungefüllten, nicht vorgespannten Zustand nicht stabil sind.

Durch das Vorspannen können ähnliche Verhältnisse erzeugt werden, wie bei gefüllten Behältern. Das bei einem vorgespannten Behälter gemessene Volumen kann daher Auskunft über das Volumen geben, das befüllt werden kann. Der Innendruck beim Vorspannen (Vorspanndruck) kann beispielsweise etwa dem gewünschten Innendruck des gefüllten, verschlossenen Behälters entsprechen. Beispielsweise kann der Vorspanndruck dem gewünschten Innendruck des gefüllten, verschlossenen Behälters mit einer maximalen Abweichung von 90%, z.B. von 50%, z.B. 10%, z.B. 5% entsprechen.

Der Innendruck beim Vorspannen, also der im Vergleich zum Umgebungsdruck zusätzliche Druck, kann zwischen 0,01 bar und 10 bar, beispielsweise zwischen 0,1 bar und 4 bar, beispielsweise zwischen 0,2 und 2 bar betragen. In dem Verfahren kann das Volumen des Behälters bestimmt werden, indem ein, zwei oder mehr Parameter bestimmt werden, die das Volumen des Behälters charakterisieren (also eine Bestimmung bzw. Abschätzung des Volumens erlauben) und diese Parameter dann ausgewertet werden. Beispielsweise können der Durchmesser des Behälters an einer oder mehreren Stellen, die Höhe des Behälters und/oder weitere Größen bestimmt werden, die das Volumen des Behälters charakterisieren.

Eine explizite Bestimmung des absoluten Volumens des Behälters ist zur Bestimmung des Volumens nicht notwendig, kann aber in einigen Ausführungsformen erfolgen. Bei relativer Bestimmung des Volumens im Vergleich zu einem Vergleichsvolumen ist üblicherweise bekannt, wie Änderungen der Parameter des (gleichartigen) Vergleichsbehälters sich auf das Volumen eines Behälters auswirken, dessen Volumen bestimmt werden soll. So kann mit den bestimmten Parametern, die das Volumen des Behälters charakterisieren, das Volumen des Behälters absolut oder relativ bestimmt werden.

Das erfindungsgemäße Bestimmen des Volumens des Behälters umfasst, ein Bild des vorgespannten Behälters, beispielsweise mittels einer Kamera und/oder optischer Mittel wie beispielsweise Kontrastverstärkung mit Richtfolie und/oder wie in DE 10 062 784 C2 beschrieben, zu erfassen und auszuwerten. Beispielsweise kann ein Bild des vorgespannten Behälters senkrecht zur Behälterachse von der Seite aufgenommen werden, so dass das Bild wenig Verzerrung aufweist. Alternativ oder zusätzlich kann ein Bild des vorgespannten Behälters z.B. schräg oder parallel zur Behälterachse aufgenommen werden. (Als Behälterachse wird hier eine Richtung angenommen, die bei aufrechtem Behälter vertikal verläuft.)

Aus einem erfassten Bild können ein, zwei oder mehr Parameter wie z.B. Fläche des Bildes des Behälters und/oder Höhe des Behälters und/oder Breite des Behälters im Bild an einer oder mehreren Stellen ausgewertet werden. Daraus kann das Volumen des Behälters bestimmt werden.

Auch können zwei, drei oder mehr Bilder des vorgespannten Behälters erfasst und ausgewertet werden, um das Volumen zu bestimmen. Beispielsweise können Behälter, die transportiert werden, während der Bewegung an einem festen oder mehreren festen Punkten gescannt werden, beispielsweise auf einer oder verschiedenen Höhen.

Abhängig von der Wahl der Parameter, die das Volumen des Behälters charakterisieren, wird das Volumen so mehr oder weniger genau bestimmt. Ein Volumen eines Behälters kann als bestimmt gelten, wenn die Parameter, die das Behältervolumen charakterisieren, eine Feststellung des (Behälter-)Volumens mit einem Fehler von unter 50%, z.B. 20%, beispielsweise von unter 10%, zum Beispiel unter 5%, zum Beispiel unter 2%, zum Beispiel unter 1%, z.B. unter 0,5% erlauben.

Unter Berücksichtigung des bestimmten Volumens können dann ein, zwei oder mehr Parameter zur Behälterbehandlung festgelegt werden. Das Festlegen von ein, zwei oder mehr Parametern zur Behätterbehandlung kann ein neues Errechnen von einem, zwei oder mehr Parametern und/oder ein Anpassen von einem, zwei, oder mehr Parametern zur Behälterbehandlung mit einem bekannten, zuvor verwendeten Wert oder einen Sollwert umfassen. Das Festlegen der einen, zwei oder mehr Parameter zur Behälterbehandlung kann z.B. zentral in einer Steuereinheit und/oder in einer, zwei oder mehr Behälterbehandlungsstationen und/oder dezentral erfolgen.

Das bestimmte Volumen des Behälters und/oder der oder die festgelegten Parameter zur Behälterbehandlung können dann an die Behälterbehandlungsstationen übertragen werden, für die sie relevant sind. Die festgelegten Parameter können dort angewendet werden. Eine Übertragung dieser Daten kann über ein Kabel und/oder kabellos erfolgen.

In einigen Ausführungsformen des Verfahrens wird der oder die bestimmten Parameter zu der oder den Behälterbehandlungen nur übertragen und/oder an der/den Behälterbehandlungsstationen angewendet, wenn die Abweichung von dem oder den bestimmten Parameter zur Behälterbehandlung zu dem zuvor verwendetem Wert oder einem Sollwert für den oder die Parameter zur Behälterbehandlung eine bestimmte Grenze überschreitet, beispielsweise um mindestens 0,1%, oder um mindestens 0,5%, oder um mindestens 1%, oder um mindestens 2% oder um mindestens 5% von den zuvor verwendeten Wert(en) oder Sollwert(en) für den/die Parameter zur Behälterbehandlung abweicht.

Dieser oder diese Parameter zur Behälterbehandlung können beispielsweise die Füllmenge des Behälters (angegeben z.B. als Füllvolumen) und/oder die Menge an Gas, die nach dem Befüllen des Behälters in den Kopfraum des Behälters eingefüllt wird (angegeben z.B. als Volumen) und/oder einen oder mehrere Streckblas-Parameter für (weitere) Behälter umfassen. Der Begriff "Behälterbehandlung" kann in diesem Text auch eine Behälterherstellung umfassen.

Der Behälter (und optional weitere Behälter) kann dann mit einer optional unter Berücksichtigung seines bestimmten Volumens festgelegten Füllmenge (abzufüllende/abgefüllte Menge an Füllgut) gefüllt werden.

In einigen Ausführungsformen des Verfahrens können beispielsweise ein, zwei, drei oder mehr Füllventile gesteuert werden. Beispielsweise kann das Füllventil, bei dem der Behälter befüllt wird, so gesteuert werden, dass die an diesem Füllventil abgegebene Menge der Füllmenge entspricht, die unter Berücksichtigung seines bestimmten Volumens festgelegt wurde. Die Füllmenge kann beispielsweise so festgelegt werden, dass das leere Kopfraumvolumen des Behälters innerhalb eines vorher festgelegten Parameterbereichs liegt, und dadurch in allen gefüllten Behältern (ungefähr) gleich ist.

In einigen Ausführungsformen des Verfahrens kann das Verfahren ein Einbringen einer Menge an Gas in den Kopfraum des Behälters (und optional weiterer Behälter) umfassen, beispielsweise eine Einspritzung des Gases. Die eingebrachte Menge kann optional unter Berücksichtigung des bestimmten Volumens des Behälters festgelegt sein. Beispielsweise kann bei konstant gehaltener Füllmenge die Menge an Gas, die nach dem Befüllen des Behälters in den Kopfraum des Behälters eingefüllt wird, festgelegt werden. Alternativ kann die Menge an Gas, die nach dem Befüllen des Behälters in den Kopfraum des Behälters eingefüllt wird, konstant gehalten werden, beispielsweise wenn die Füllmenge so festgelegt ist, dass das Kopfraumvolumen von gefüllten Behältern (ungefähr) gleich ist.

In einigen Ausführungsformen des Verfahrens werden die Füllmenge und die Menge an Gas, die nach dem Befüllen des Behälters in den Kopfraum des Behälters eingefüllt wird, unter Berücksichtigung des bestimmten Volumens des Behälters und in Abhängigkeit voneinander festgelegt.

Das Gas, das nach dem Befüllen des Behälters in den Kopfraum des Behälters eingefüllt wird, kann eine Gasmischung oder ein inertes Gas, beispielsweise Stickstoff und/oder Argon, sein oder umfassen.

Das Verfahren kann ein Streckblasen von weiteren Behältern (z.B. nach dem Bestimmen des Volumens des Behälters) umfassen, wobei dabei ein oder mehr Streckblas-Parameter angewendet werden, die unter Berücksichtigung des bestimmten Volumens des Behälters festgelegt wurden. So können Behälter mit einem einheitlicheren (Soll-)Volumen erzeugt werden. Beispielsweise können, wenn das bestimmte Volumen des Behälters größer/kleiner ist als ein Sollwert, die Streckblasparameter entsprechend angepasst werden, so dass Behälter mit geringeren/größeren Größen geblasen werden.

Dieser Verfahrensschritt kann zum Beispiel vorteilhaft sein, wenn während des Verfahrens Änderungen der Betriebsparameter, beispielsweise durch die Temperatur des laufenden Systems oder der Umgebung auftreten und das Volumen der erzeugten Behälter beeinflussen.

Das Verfahren kann umfassen, dass der für das Bestimmen des Volumens vorgespannte Behälter (und optional weitere Behälter) etikettiert wird.

Eine solche Etikettierung kann vor, während oder nach dem Bestimmen des Volumens des Behälters erfolgen. Beispielsweise kann ein Erfassen von einem, zwei oder mehr Parameter, die das Volumen charakterisieren, vor dem Etikettieren erfolgen und die anschließende Auswertung vor, während und/oder nach dem Etikettieren des Behälters. Eine solche Ausführungsform des Verfahrens kann zum Beispiel dann vorteilhaft sein, wenn Behälter zum Etikettieren vorgespannt werden müssen, damit die Etiketten am gefüllten Behälter glatt anliegen. Bei dem oder den für das Etikettieren vorgespannten Behältern kann dann das Volumen bestimmt werden.

Nach dem Etikettieren kann der Innendruck wieder abgelassen werden und der Druck auf Umgebungsdruck ausgeglichen werden, beispielsweise bevor der Behälter (unter Innendruck, der dann vor dem Befüllen neu aufgebaut werden muss, oder drucklos) befüllt wird.

Eine solche Ausführungsform des Verfahrens, in denen der für das bestimmen des Volumens vorgespannte Behälter etikettiert wird, kann vorteilhaft sein, da in manchen Ausführungsformen beim Etikettieren Behälter direkt nacheinander transportiert werden können und/oder weil ein relative zeitiges Bestimmen des Volumens des Behälters genügen Zeit zum Ansteuern von einer Abfüllvorrichtung erlaubt. Auch kann es vorteilhaft sein, da in manchen Ausführungsformen Behälter während des Etikettierens alle eine Etikettierstation passieren, danach aber an mehreren Füllstationen und/oder mehreren Füllventilen befüllt werden können.

In anderen Ausführungsformen des Verfahrens kann der Vorspanndruck beim Bestimmen des Volumens und optionalen Etikettieren für einen oder mehrere weitere Behälterbehandlungsschritte, beispielsweise das Befüllen des Behälters, beibehalten oder erhöht werden.

Das Verfahren kann auch eine Kontrolle des gefüllten Behälters umfassen. Beispielsweise kann der Innendruck des gefüllten Behälters kontrolliert werden, beispielsweise durch einen Squeezer. Alternativ oder zusätzlich kann das Gewicht des gefüllten Behälters, und dadurch indirekt das Gewicht der Füllmenge durch eine Waage kontrolliert werden. Eine Kontrolle des gefüllten Behälters kann auch durch optische Mittel, beispielsweise Erfassen mit einer Kamera erfolgen. Beispielsweise kann bei durchsichtigen Behältern die Füllhöhe optisch bestimmt werden.

Die Kontrolle des gefüllten Behälters kann vor oder nach einem Verschließen des Behälters erfolgen. Die Ergebnisse können zur statistischen Berücksichtigung für die zukünftigen Parameter zur Behälterbehandlung oder zur direkten Berücksichtigung für die Parameter zur Behälterbehandlung eines folgenden Behälters verwendet werden. Beispielsweise kann, wenn sich herausstellt, dass die Füllhöhe und/oder der Innendruck in Behältern am Ende zu groß/zu klein sind, die Art wie die Parameter zur Behälterbehandlung festgelegt werden, geändert werden, so dass die Füllhöhe und/oder der Innendruck in Behältern geringer/größer wird.

In einigen Ausführungsformen des Verfahrens, in denen die Kontrolle des gefüllten Behälters vor einem Verschließen des Behälters erfolgt, kann im Verfahren ein Korrekturschritt vorgesehen sein. Beispielsweise kann im Falle einer zu niedrigen Füllhöhe (abhängig von der gemessenen Füllhöhe) nachgefüllt werden. Die Kontrolle nach dem Befüllen und vor dem Verschließen des Behälters kann, wenn das Befüllen unter Druck erfolgt, vorgenommen werden, während dem Behälter noch unter Druck steht.

Erfolgt die Kontrolle des gefüllten Behälters nach dem Verschließen des Behälters, kann das Verfahren ein Aussortieren des gefüllten Behälters umfassen, der bei der Kontrolle nicht die erforderlichen Kriterien erfüllt.

Das Verfahren kann ein Optimieren der Parameter zur Behälterbehandlung aufgrund der Kontrolle des gefüllten Behälters und/oder des bestimmten Volumens umfassen und damit beispielsweise in einem selbstlernenden System implementiert werden. Der Optimierschritt kann einmal, in regelmäßigen Abständen oder kontinuierlich erfolgen.

Ein solches Verfahren kann zum Beispiel in Systemen verwendet werden, in denen beim gesamten Durchlauf durch das System die Behälter zuordenbar sind, also bekannt ist, wo sich der Behälter im System gerade befindet.

In einem solchen Verfahren kann das Volumen von jedem Behälter bestimmt werden, der befüllt und/oder streckgeblasen wird. Jeder Behälter kann gemäß den zuvor beschriebenen Verfahren behandelt werden. Dabei können der oder die Parameter zur Behälterbehandlung nach jedem Bestimmen des Volumens eines Behälters festgelegt, übertragen und angewendet werden. In anderen Ausführungsformen des Verfahrens wird für jeden Behälter, der befüllt und streckgeblasen wird, der oder die bestimmten Parameter zur Behälterbehandlung jedoch nur übertragen oder angewendet, wenn die Abweichung von den zuvor verwendeten Parametern zur Behälterbehandlung einen bestimmten Wert überschreitet, beispielsweise die festgelegten Parameter um mindestens 0,1%, oder um mindestens 0,5%, oder um mindestens 1%, oder um mindestens 2% oder um mindestens 5% oder um mindestens 10 % von den zuvor verwendeten Parametern zur Behälterbehandlung abweichen.

In anderen Ausführungsformen des Verfahrens wird nicht für jeden Behälter das Volumen bestimmt, sondern das Volumen von Behältern wird in Abständen bestimmt, also nur für einige Behälter. In einem solchen Verfahren können der oder die Parameter zur Behälterbehandlung, die für einen Behälter bestimmt wurden, für weitere Behälter verwendet werden sondern z.B. für nachfolgende Behälter. So muss nicht das Volumen von jedem Behälter bestimmt werden. Trotzdem kann so ein Verfahren ermöglichen, z.B. durch Ändern von Parametern zur Behälterbehandlung einzugreifen, wenn sich während der Laufzeit eines Systems Änderungen von Umgebungsparametern, wie z.B. Temperatur, Streckblasparametern oder Systemparametern, ergeben, die das Volumen von Behältern beeinflussen.

Zum Beispiel kann nach einer bestimmten Anzahl von Behältern oder einer bestimmten Zeit das Volumen von einem weiteren Behälter bestimmt werden, beispielsweise bei jedem zehnten oder jedem hundertsten Behälter oder alle zwei oder alle zehn Minuten das Volumen eines Behälters bestimmt werden.

Die Kontrolle des gefüllten Behälters kann in Systemen, in denen die Behälter zuordenbar sind, also zu jedem Zeitpunkt klar ist, wo welcher Behälter ist, zu einem Zeitpunkt erfolgen, wo die Behälter jeweils noch zuordenbar sind. Somit können die Ergebnisse der Kontrolle verwendet werden, um die Art zu optimieren, wie der oder die Parameter zur Behälterbehandlung festgelegt werden.

Alternativ oder zusätzlich kann eine solche Kontrolle zu einem Zeitpunkt erfolgen, zu dem die Behälter nicht (mehr) zuordenbar sind, also nicht klar ist, um welchen Behälter es sich handelt. In diesem Fall können die Ergebnisse der Kontrolle statistisch ausgewertet werden. Die statistischen Ergebnisse können zum Optimieren der Art verwendet werden, wie der oder die Parameter zur Behälterbehandlung festgelegt werden.

Beispielsweise kann das Verfahren umfassen, dass zuerst bei einigen Behältern ein Bestimmen des Volumens ohne Festlegung von Parametern zur Behälterbehandlung erfolgt. Bei weiteren Behältern könnte dann das Befüllen der nächsten Behälter unter Anwendung eines unter Berücksichtigung des bestimmten Volumens festgelegten Parameters zur Behälterbehandlung, z.B. der unter Berücksichtigung des gemessenen Volumens festgelegten Füllmenge erfolgen. Optional oder alternativ können gleichzeitig oder danach andere Parameter zur Behälterbehandlung, wie die Menge an Gas, die in den Kopfraum des Behälters eingespritzt wird, und/oder ein oder mehrere Streckblasparameter festgelegt und angewendet werden.

Anschließend kann eine Kontrolle des befüllten Behälters einen Vergleich zwischen den beiden Ergebnissen (Abfüllen mit und ohne Anwendung des oder der festgelegten Parameter zur Behälterbehandlung) die Art, wie der oder die Parameter zur Behälterbehandlung festgelegt werden, optimiert werden.

Die Erfindung umfasst auch eine Vorrichtung zum Durchführen des erfindungsgemäßen Verfahrens nach Anspruch 14, mit Mitteln zum Vorspannen des Behälters Bei der Vorrichtung sind Mittel zum Bestimmen des Volumens eines Behälters gemäß einem der zuvor beschriebenen Verfahren umfasst.

Die Vorrichtung umfasst eine Steuerung, die dafür ausgebildet ist, die Vorrichtung so zu steuern, dass sie die Schritte eines oben beschriebenen Verfahrens ausführt.

Des Weiteren kann die Vorrichtung Mittel zum Durchführen von einer, zwei, mehr oder allen Ausführungsformen des zuvor genannten Verfahrens umfassen. Die Erfindung wird anhand der Figuren näher erklärt. Hierbei zeigt
Fig. 1 eine schematische Skizze aus einem Schritt eines erfindungsgemäßen Verfahrens,
Fig. 2 eine Vorrichtung, in der ein erfindungsgemäßes Verfahren durchgeführt werden kann, und
Fig. 3 Schritte einer Ausführungsform des Verfahrens.

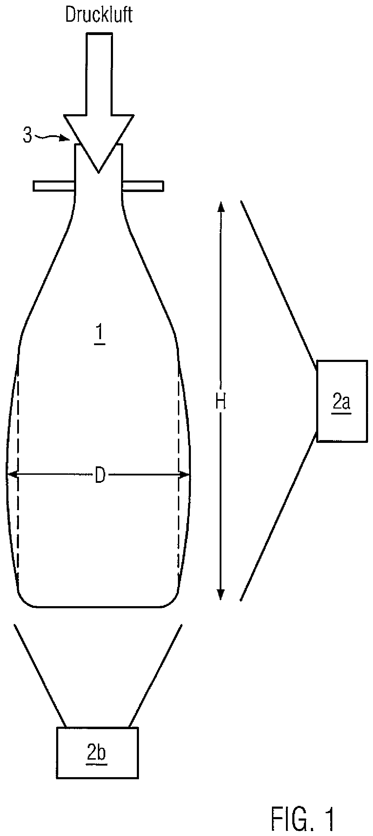

Fig. 1 zeigt einen forminstabilen Behälter 1, beispielsweise eine streckgeblasene Leichtgewicht-Flasche aus PET. Der Behälter 1 ist vorgespannt, während sein Volumen bestimmt wird.

In diesem Fall erfolgt die Vorspannung durch von oben eingeleitete Druckluft. In anderen Ausführungsformen können jedoch auch andere Gase oder Gasgemische, die beispielsweise Stickstoff und/oder Argon umfassen, zum Vorspannen verwendet werden.

Die in der Vorrichtung, die zur Durchführung des erfindungsgemäßen Verfahrens geeignet ist, vorhandenen Mittel 3 zum Vorspannen des Behälters können beispielsweise einen die Behälteröffnung abdichtenden Aufsatz, durch den Gas unter Druck eingeleitet werden kann, umfassen. Durch das eingeleitete Gas wird der Behälter 1 von innen unter Druck gesetzt (vorgespannt). Dadurch ändert der forminstabile Behälter üblicherweise seine Form. Durch den Innendruck kann sich die Form des Behälters an die Form annähern, die sie im gefüllten Zustand auch hat.

In dem gezeigten Beispiel sind Mittel 2a, 2b zum Bestimmen des Volumens des Behälters eingezeichnet. Zum Beispiel können hierbei Mittel 2a und/oder 2b als Kamera und/oder Scanner und/oder anderer Sensor ausgebildet sein. Mittel 2a erlauben in diesem Beispiel die Höhe H zu erfassen. Mittel 2b erfassen in dem hier gezeigten Beispiel den maximalen Durchmesser D des vorgespannten Behälters 1. In anderen Ausführungsformer des Verfahrens können andere Parameter, die den Behälter charakterisieren, beispielsweise die Durchmesser des Behälters auf mehreren Höhen bestimmt werden.

In anderen Ausführungsformen der Vorrichtung können mehr Mittel als die hier eingezeichneten Mittel 22a und 22b zur Bestimmung des Volumens vorhanden sein oder nur ein Mittel, beispielsweise eine Kamera.

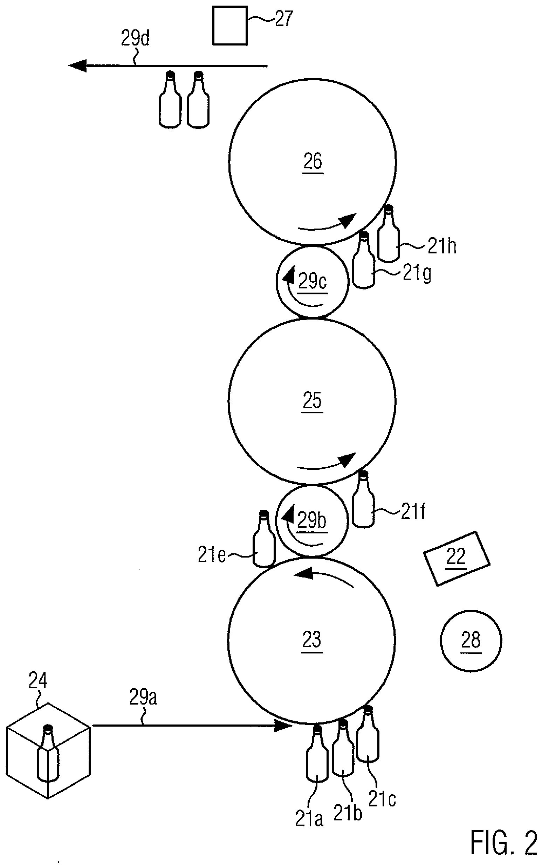

Fig. 2 zeigt schematisch eine Vorrichtung 24 zum Streckblasen von Behältern. Aus dieser Vorrichtung können die Behälter dann über Verbindungsstrecken 29a zu einem Etikettierer 23 befördert werden. Die Verbindungsstrecke 29a kann beispielsweise als Transferkarussell, Linear- oder Bandförderer oder ähnliches ausgebildet sein oder ein solches umfassen. Am Etikettierer 23, der in diesem Fall als ein Etikettierkarussell ausgebildet ist, sind Behälter 21a, 21b und 21c eingezeichnet.

Die Etiketten werden vom Etikettenspender 28 bereitgestellt und an dieser Stelle auch auf die Behälter aufgebracht.

Die forminstabilen Behälter 21a, 21b und 21c werden im Etikettierer 23 vorgespannt, so dass das Etikett, das vom Etikettenspender 28 aufgebracht wird, glatt anliegt. In dem vorgespannten Zustand wird der Behälter durch Mittel 22 zum Bestimmen des Volumens des Behälters, beispielsweise einer Kamera, erfasst. Das daraus resultierende Bild bzw. die daraus erhaltenen Parameter können, beispielsweise mit einer geeigneten Software, ausgewertet werden.

Die Mittel 22 zum Bestimmen des Volumens sind in diesem Fall als (in Laufrichtung der Behälter) hinter dem Etikettenspender 28 liegend eingezeichnet, können jedoch auch (in Laufrichtung der Behälter) vor dem Etikettenspender 28 oder auf Höhe des Etikettenspenders 28 am Etikettierer 23, der in diesem Beispiel als Etikettierkarussell ausgebildet ist, angeordnet sein.

In anderen Ausführungsformen des Verfahrens bzw. der Vorrichtung können solche Mittel 22 zum Bestimmen des Volumens des Behälters auch an einer anderen Stelle angebracht sein, beispielsweise im Abfüller 25 vor der Befülleinrichtung, an der Verbindungsstrecke 29a oder an einer anderen Stelle.

In der gezeigten Ausführungsform werden die Behälter durch die Transfereinrichtung 29b, die hier als Karussell ausgebildet, in dem Behälter 21e gezeigt ist, in den Abfüller 25 übertragen. Die Transfereinrichtung 29b kann auch als Linear- oder Bandförderer ausgebildet sein oder einen solchen umfassen.

Im Abfüller 25 werden die Behälter befüllt. Beispielhaft ist Behälter 21f im Abfüller 25 eingezeichnet. Üblicherweise wird in Transfereinrichtung 29b, die hier als Transferkarussell ausgebildet ist, der Behälter nicht unter Innendruck transportiert, sondern der Druck des Behälters ist zu diesem Zeitpunkt ausgeglichen. Wenn die Abfüllung unter Druck erfolgt, muss der Behälter im Abfüller 25 wieder vorgespannt werden.

Im Abfüller 25 werden die Behälter befüllt. Hierbei kann ein Füllventil oder die Abfüllanlage, an der ein bestimmter Behälter, beispielsweise 21f, behandelt wird, die Füllmenge abgeben, die aufgrund des bestimmten Volumens des Behälters festgelegt wurde. Das Füllventil oder die Abfüllanlage, an der ein bestimmter Behälter, beispielweise 21f, und/oder weitere Behälter behandelt werden, kann die Füllmenge abgeben, die unter Berücksichtigung des Volumens eines anderen, beispielsweise zuvor gemessenen, Behälters festgelegt wurde.

Anschließend kann während der Behälter 21f noch im Abfüller ist, eine Kontrolle des Behälters erfolgen. Bei befüllten durchsichtigen Behältern kann optisch die Füllhöhe bestimmt werden und korrigiert werden. In anderen Ausführungsformen erfolgt im Abfüller keine Kontrolle des Behälters.

Anschließend wird der Behälter über Transfereinrichtung 29c, das hier als Transferkarussell eingezeichnet ist, aber auch als andere Beförderungseinrichtung wie ein Linearförderer oder Bandförderer ausgebildet sein oder einen solchen umfassen kann, zum Verschließer 26 transportiert. In anderen Ausführungsformen umfasst die Vorrichtung keinen Verschließer. In der Fig. 2 sind Behälter 21g und 21h im Verschließer 26 eingezeichnet.

Vor dem Verschließen kann noch eine Gaseinspritzung, z.B. durch Mittel zur Gaseinspritzung, erfolgen, bevor der Behälter verschlossen wird. Dies kann beispielsweise kurz vor dem Auslauf aus dem Karussell des Abfüllers, in der Transfereinrichtung 29c oder im Verschließer 26 erfolgen, bevor die Behälter verschlossen werden.

Nach dem Verschließen werden die Behälter aus dem Verschließer 26 heraustransportiert über Transportvorrichtung 29d, in diesem Beispiel als Linearbeförderer eingezeichnet ist, aber auch als Bandförderer und/oder Transferkarussell ausgebildet sein oder ein solches umfassen kann.

In der in Fig. 2 gezeigten Ausführungsform umfasst die Vorrichtung Mittel 27 zur Kontrolle der befüllten Behälter. In diesem Beispiel erfolgt die Kontrolle, nachdem die Behälter bereits verschlossen sind. Die Ergebnisse der Kontrolle können verwendet werden, um, beispielsweise in einem selbstlernenden System, die Parameter zur Behälterbehandlung oder die Art, wie sie bestimmt werden, zu optimieren. Die Kontrolle kann auch vor dem Verschließen erfolgen.

Üblicherweise erfüllen die durch die Vorrichtung gelaufenen Behälter die erforderlichen Kriterien, so dass sie akzeptabel sind. Für den Fall, dass die Kontrolle ergibt, dass die gefüllten Behälter nicht akzeptabel sind, können Mittel vorgesehen sein, mit denen solche Behälter aussortiert werden oder anderweitig aus dem Kreislauf entfernt werden oder (bei nicht verschlossenen Behältern) eine Korrektur, beispielsweise durch Hinzufügen zusätzlichen Füllgutes vorgenommen wird.

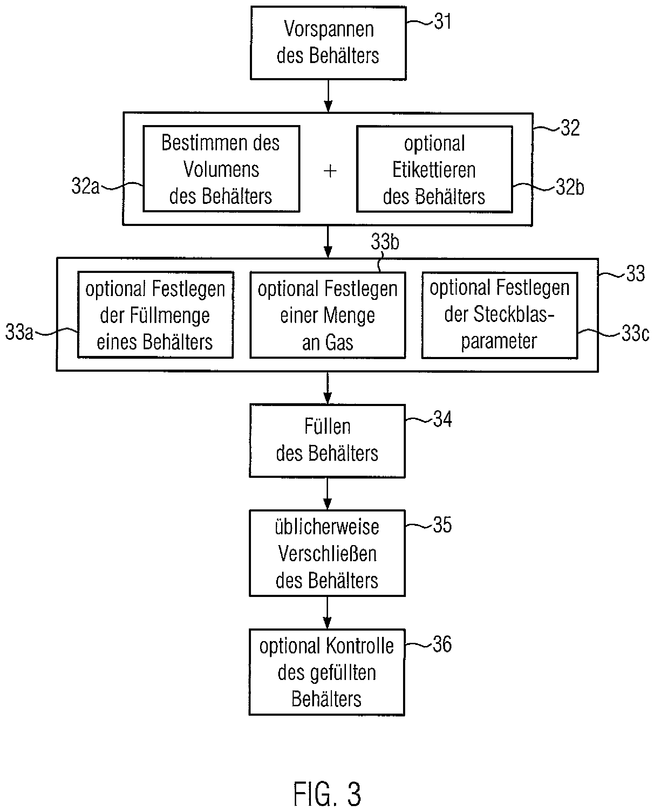

Fig. 3 zeigt Schritte, die im Verfahren umfasst sein können.

Als ersten Schritt zeigt sie ein Vorspannen 31 des Behälters. Am vorgespannten Behälter erfolgt dann ein Bestimmen 32a des Volumens des Behälters. Hierzu können beispielsweise einer oder mehrere Parameter, die das Volumen des Behälters charakterisieren, erfasst und dann ausgewertet werden. Damit kann das Volumen absolut oder relativ bestimmt werden.

Optional wird der vorgespannte Behälter noch etikettiert (32b). Dies kann vor, während oder nach dem Bestimmen des Volumens des Behälters passieren.

Unter Berücksichtigung des bestimmten Volumens können ein, zwei oder mehr Parameter zur Behälterbehandlung festgelegt werden (33). Diese kann beispielsweise ein Festlegen der Füllmenge des Behälters (33a) und/oder das Festlegen einer Menge an Gas, die in den Kopfraum eingefüllt wird (33b), und/oder einen oder mehr Streckblas-Parameter für Behälter (33c) umfassen.

Anschließend erfolgt ein Befüllen des Behälters (Verfahrensschritt 34 in Fig. 3). Dieses Befüllen des Behälters kann mit der festgelegten Füllmenge erfolgen. Ebenfalls kann eine Menge an Gas in den Kopfraum des Behälters eingespritzt werden, beispielsweise Stickstoff (hier nicht gezeigt). Diese Menge an Gas kann einer zuvor festgelegten Menge an Gas entsprechen. Optional werden festgelegte Streckblasparameter, z.B. für weitere zu erzeugende Behälter angewendet.

Üblicherweise wird der Behälter dann verschlossen (35). Das Verfahren kann auch noch eine Kontrolle 36 des gefüllten Behälters umfassen.

## Patentansprüche

1. Verfahren zum Befüllen von forminstabilen Kunststoffbehältern (1, 21) mit einem flüssigen Füllgut, wobei ein Kunststoffbehälter mit Gas oder einem Gasgemisch vorgespannt wird, wobei das Volumen des Kunststoffbehälters (1, 21) im vorgespannten Zustand bestimmt wird, bevor der Kunststoffbehälter befüllt wird, **dadurch gekennzeichnet, dass** das Bestimmen des Volumens des Kunststoffbehälters (1, 21) umfasst, ein Bild des vorgespannten Kunststoffbehälters (1, 21) zu erfassen und auszuwerten.

2. Verfahren zum Befüllen von forminstabilen Kunststoffbehältern (1, 21) mit einem flüssigen Füllgut nach Anspruch 1, wobei die Kunststoffbehälter (1, 21) Getränkebehälter aus Kunststoff und/oder streckgeblasene Behälter aus PET, PEN oder einem anderen Kunststoff, beispielsweise Flaschen, sind.

3. Verfahren zum Befüllen von forminstabilen Kunststoffbehältern (1, 21) mit einem flüssigen Füllgut nach einem der vorhergehenden Ansprüche, bei denen der Vorspanndruck etwa dem gewünschten Innendruck des gefüllten, verschlossenen Kunststoffbehälters entspricht.

4. Verfahren zum Befüllen von forminstabilen Behältern (1, 21) mit einem flüssigen Füllgut nach einem der vorhergehenden Ansprüche, bei dem unter Berücksichtigung des bestimmten Volumens ein, zwei oder mehr Parameter zu einer Behälterbehandlung festgelegt werden (33a).

5. Verfahren zum Befüllen von forminstabilen Kunststoffbehältern (1, 21) mit einem flüssigen Füllgut nach einem der vorhergehenden Ansprüche, wobei der Kunststoffbehälter (1, 21) mit einer unter Berücksichtigung des bestimmten Volumens festgelegten Füllmenge befüllt wird.

6. Verfahren zum Befüllen von forminstabilen Kunststoffbehältern (1, 21) mit einem flüssigen Füllgut nach einem der vorhergehenden Ansprüche, das ein Einbringen einer Menge an Gas in den Kopfraum des gefüllten Kunststoffbehälters (1, 21) umfasst, die optional unter Berücksichtigung des bestimmten Volumens festgelegt wurde.

7. Verfahren zum Befüllen von forminstabilen Kunststoffbehältern (1, 21) mit einem flüssigen Füllgut nach einem der vorhergehenden Ansprüche, das ein Streckblasen von weiteren Kunststoffbehältern umfasst, wobei optional ein oder mehr Streckblas-Parameter angewendet werden, die unter Berücksichtigung des bestimmten Volumens des Kunststoffbehälters (1, 21) festgelegt wurden.

8. Verfahren zum Befüllen von forminstabilen Kunststoffbehältern (1, 21) mit einem flüssigen Füllgut nach einem der vorhergehenden Ansprüche, wobei der für das Bestimmen des Volumens vorgespannte Kunststoffbehälter (1, 21) etikettiert wird (32b), wobei optional der ungefüllte Kunststoffbehälter nach dem Bestimmen des Volumens auf Umgebungsdruck entspannt wird.

9. Verfahren zum Befüllen von forminstabilen Behältern (1, 21) mit einem flüssigen Füllgut nach einem der vorhergehenden Ansprüche, wobei der für das Bestimmen des Volumens vorgespannte Kunststoffbehälter (1, 21) befüllt wird.

10. Verfahren zum Befüllen von forminstabilen Kunststoffbehältern (1, 21) mit einem flüssigen Füllgut nach einem der vorhergehenden Ansprüche, das eine Kontrolle des gefüllten Kunststoffbehälters (1, 21) umfasst (36).

11. Verfahren zum Befüllen von forminstabilen Kunststoffbehältern (1, 21) mit einem flüssigen Füllgut nach Anspruch 10, das ein Optimieren des oder der bestimmten Parameter zu einer Behälterbehandlung aufgrund der Kontrolle des gefüllten Kunststoffbehälters und/oder des bestimmten Volumens umfasst.

12. Verfahren zum Befüllen von forminstabilen Kunststoffbehältern (1, 21) mit einem flüssigen Füllgut nach einem der vorhergehenden Ansprüche, bei denen das Volumen von jedem Kunststoffbehälter bestimmt wird, der befüllt und streckgeblasen wird.

13. Verfahren zum Befüllen von forminstabilen Kunststoffbehältern (1, 21) mit einem flüssigen Füllgut nach einem der vorhergehenden Ansprüche, bei dem das Volumen von Kunststoffbehältern (1, 21) in Abständen bestimmt wird.

14. Vorrichtung zum Befüllen von forminstabilen Kunststoffbehältern (1, 21), mit einer Steuerung zum Durchführen eines Verfahrens nach einem der Ansprüche 1 - 13, und mit Mitteln (3) zum Vorspannen einer forminstabilen Kunststoffbehälter mit Gas oder einem Gasgemisch, und Mitteln (2, 22) zum Bestimmen des Volumens des Kunststoffbehälters (1, 21) im vorgespannten Zustand, wobei die Mittel (3) zum Vorspannen des Kunststoffbehälters (1, 21) vor einer Befülleinrichtung zum Befüllen des Kunststoffbehälters (1, 21) angeordnet sind, **dadurch gekennzeichnet, dass** die Mittel (2, 22) zum Bestimmen des Volumens des Kunststoffbehälters (1, 21) konfiguriert sind, ein Bild des vorgespannten Kunststoffbehälters (1, 21) zu erfassen und zum Bestimmen des Volumens auszuwerten.

## Claims

1. Method for filling dimensionally unstable plastic containers (1, 21) with a liquid content, a plastic container being pretensioned with gas or a gas mixture, the volume of the plastic container (1, 21) in the pretensioned state being determined before the plastic container is filled,
**characterized in that**
determining the volume of the plastic container (1, 21) comprises detecting and evaluating an image of the pretensioned plastic container (1, 21).

2. Method for filling dimensionally unstable plastic containers (1, 21) with a liquid content according to claim 1, wherein the plastic containers (1, 21) are beverage containers made of plastic and/or stretch-blown containers made of PET, PEN or another plastic, for example bottles.

3. Method for filling dimensionally unstable plastic containers (1, 21) with a liquid content according to one of the preceding claims, in which the pretensioning pressure corresponds approximately to the desired internal pressure of the filled, sealed plastic container.

4. Method for filling dimensionally unstable plastic containers (1, 21) with a liquid content according to one of the preceding claims, in which one, two or more parameters for container treatment are defined (33a) taking into account the determined volume.

5. Method for filling dimensionally unstable plastic containers (1, 21) with a liquid content according to one of the preceding claims, wherein the plastic container (1, 21) is filled with a filling quantity defined taking into account the determined volume.

6. Method for filling dimensionally unstable plastic containers (1, 21) with a liquid content according to one of the preceding claims, comprising introducing into the headspace of the filled plastic container (1, 21) a quantity of gas which has optionally been defined taking into account the determined volume.

7. Method for filling dimensionally unstable plastic containers (1 , 21) with a liquid content according to one of the preceding claims, which method comprises stretch blow-molding further plastic containers, wherein optionally one or more stretch blow-molding parameters are applied which have been defined taking into account the determined volume of the plastic container (1, 21).

8. Method for filling dimensionally unstable plastic containers (1, 21) with a liquid content according to one of the preceding claims, wherein the plastic container (1, 21) pretensioned for determining the volume is labeled (32b), wherein optionally the unfilled plastic container is relaxed to ambient pressure after determining the volume.

9. Method for filling dimensionally unstable plastic containers (1, 21) with a liquid content according to one of the preceding claims, wherein the plastic container (1, 21) pretensioned for determining the volume is filled.

10. Method for filling dimensionally unstable plastic containers (1, 21) with a liquid content according to one of the preceding claims, which comprises (36) checking the filled plastic container (1, 21).

11. Method for filling dimensionally unstable plastic containers (1, 21) with a liquid content according to claim 10, comprising optimizing the determined parameter(s) for container treatment on the basis of the checking of the filled plastic container and/or the determined volume.

12. Method for filling dimensionally unstable plastic containers (1, 21) with a liquid content according to one of the preceding claims, in which the volume of each plastic container which is filled and stretch-blown is determined.

13. Method for filling dimensionally unstable plastic containers (1, 21) with a liquid content according to one of the preceding claims, in which the volume of plastic containers (1, 21) is determined at intervals.

14. Device for filling dimensionally unstable plastic containers (1, 21), comprising a control for carrying out a method according to one of claims 1-13, and comprising tools (3) for pretensioning a dimensionally unstable plastic container with gas or a gas mixture, and tools (2, 22) for determining the volume of the plastic container (1, 21) in the pretensioned state, wherein the tools (3) for pretensioning the plastic container (1, 21) are arranged in front of a filling device for filling the plastic container (1, 21), **characterized in that** the tools (2, 22) for determining the volume of the plastic container (1, 21) are configured to detect an image of the pretensioned plastic container (1, 21) and to evaluate it for determining the volume.

## Revendications

1. Procédé pour assurer le remplissage de contenants plastiques (1, 21) de forme non stable avec un produit de remplissage liquide, un contenant plastique étant mis en précontrainte à l'aide d'un gaz ou d'un mélange de gaz, et le volume du contenant plastique (1, 21) dans l'état précontraint étant déterminé avant le remplissage du contenant plastique, **caractérisé en ce que** la détermination du volume du contenant plastique (1, 21) comprend le relevé et le traitement d'une image du contenant (1, 21) précontraint.

2. Procédé pour assurer le remplissage de contenants plastiques (1, 21) de forme non stable avec un produit de remplissage liquide, selon la revendication 1, d'après lequel les contenants plastiques (1, 21) sont des contenants en matière plastique pour boissons, et/ou des contenants obtenus par étirage-soufflage en PET, PEN ou une autre matière plastique, et sont par exemple des bouteilles.

3. Procédé pour assurer le remplissage de contenants plastiques (1, 21) de forme non stable avec un produit de remplissage liquide, selon l'une des revendications précédentes, d'après lequel la pression de mise en précontrainte correspond sensiblement à la pression intérieure souhaitée du contenant plastique rempli et fermé.

4. Procédé pour assurer le remplissage de contenants plastiques (1, 21) de forme non stable avec un produit de remplissage liquide, selon l'une des revendications précédentes, d'après lequel en prenant en considération le volume ayant été déterminé, on fixe (33a) un, deux ou davantage de paramètres relatifs à un traitement de contenant.

5. Procédé pour assurer le remplissage de contenants plastiques (1, 21) de forme non stable avec un produit de remplissage liquide, selon l'une des revendications précédentes, d'après lequel on remplit le contenant plastique (1, 21) avec une quantité de remplissage prenant en considération ledit volume ayant été déterminé.

6. Procédé pour assurer le remplissage de contenants plastiques (1, 21) de forme non stable avec un produit de remplissage liquide, selon l'une des revendications précédentes, comprenant l'introduction dans l'espace de tête du contenant plastique (1, 21) ayant été rempli, d'une quantité de gaz, qui a été fixée de manière optionnelle en prenant en considération le volume ayant été déterminé.

7. Procédé pour assurer le remplissage de contenants plastiques (1, 21) de forme non stable avec un produit de remplissage liquide, selon l'une des revendications précédentes, qui comprend un étirage-soufflage d'autres contenants plastiques, et d'après lequel de manière optionnelle, on utilise un ou davantage de paramètres d'étirage-soufflage, qui ont été fixés en prenant en considération ledit volume ayant été déterminé du contenant plastique (1, 21).

8. Procédé pour assurer le remplissage de contenants plastiques (1, 21) de forme non stable avec un produit de remplissage liquide, selon l'une des revendications précédentes, d'après lequel on procède à l'étiquetage (32b) du contenant plastique (1, 21) précontraint pour la détermination du volume, et d'après lequel, de manière optionnelle, on soumet le contenant plastique non rempli, après la détermination du volume, à une détente à la pression environnante.

9. Procédé pour assurer le remplissage de contenants plastiques (1, 21) de forme non stable avec un produit de remplissage liquide, selon l'une des revendications précédentes, d'après lequel on remplit le contenant plastique (1, 21) précontraint pour la détermination du volume.

10. Procédé pour assurer le remplissage de contenants plastiques (1, 21) de forme non stable avec un produit de remplissage liquide, selon l'une des revendications précédentes, qui comprend un contrôle (36) du contenant plastique (1, 21) ayant été rempli.

11. Procédé pour assurer le remplissage de contenants plastiques (1, 21) de forme non stable avec un produit de remplissage liquide, selon la revendication 10, qui comprend une optimisation du ou des paramètres déterminés pour un traitement de contenant sur la base du contrôle du contenant plastique rempli et/ou du volume ayant été déterminé.

12. Procédé pour assurer le remplissage de contenants plastiques (1, 21) de forme non stable avec un produit de remplissage liquide, selon l'une des revendications précédentes, d'après lequel on détermine le volume de chaque contenant plastique, qui est étiré-soufflé et rempli.

13. Procédé pour assurer le remplissage de contenants plastiques (1, 21) de forme non stable avec un produit de remplissage liquide, selon l'une des revendications précédentes, d'après lequel on détermine le volume de contenants plastiques (1, 21) à intervalles donnés.

14. Installation destinée au remplissage de contenants plastiques (1, 21) de forme non stable, comprenant une commande pour la mise en oeuvre d'un procédé selon l'une des revendications 1 - 13, et comprenant également des moyens (3) pour la mise en précontrainte du contenant plastique à l'aide de gaz ou d'un mélange de gaz, ainsi que des moyens (2, 22) pour déterminer le volume du contenant plastique (1, 21) dans l'état précontraint, les moyens (3) pour la mise en précontrainte du contenant plastique (1, 21) étant agencés en amont d'un dispositif de remplissage destiné à remplir le contenant plastique (1, 21), **caractérisée en ce que** les moyens (2, 22) pour déterminer le volume du contenant plastique (1, 21) sont configurés pour relever une image du contenant plastique (1, 21) et traiter celle-ci pour la détermination du volume.
